# FASCICULE DE BREVET EUROPEEN

(11) **EP 2 788 143 B1**
(45) Date de publication et mention de la délivrance du brevet: **06.02.2019**
(21) Numéro de dépôt: 12810350.4
(22) Date de dépôt: 05.12.2012
(51) Int. Cl.: B23P 6/00, F01D 5/00, F01D 5/34, B24C 1/04, B24C 5/00, C21D 7/00, B24B 1/04, B24B 39/00, B24C 1/10

(54) **PROCÉDÉ DE REFORMAGE PAR GRENAILLAGE D'UNE AUBE DE TURBOMACHINE COMPORTANT AU MOINS UNE ZONE DÉFORMÉE**
VERFAHREN ZUM UMFORMEN DURCH KUGELSTRAHLEN EINER TURBOMASCHINENSCHAUFEL MIT MINDESTENS EINER VERFORMTEN ZONE
METHOD FOR RESHAPING BY PEENING A TURBOMACHINE BLADE THAT HAS AT LEAST ONE ZONE THAT HAS BECOME DEFORMED

(30) Priorité: 07.12.2011 FR 1161272
(43) Date de publication de la demande: 15.10.2014
(73) Titulaire: Safran Aircraft Engines, 75015 Paris (FR)
(72) Inventeur: DERRIEN, Gérard, F-77550 Moissy-Cramayel Cedex (FR)
(74) Mandataire: Gevers & Orès
(86) Numéro de dépôt international: PCT/FR2012/052811
(87) Numéro de publication internationale: WO 2013/083918

(56) Documents cités:
- EP-A1- 1 555 329
- EP-A1- 2 149 426
- WO-A2-2009/105221
- DE-A1-102004 058 146
- FR-A1- 2 815 281
- US-A1- 2006 090 336

## Description

La présente invention concerne le domaine de la réparation d'un disque aubagé monobloc (DAM) d'un turboréacteur d'aéronef et vise, plus généralement, la réparation de toute aube de turbomachine.

Un turboréacteur d'aéronef comporte de manière classique une pluralité de disques de rotor aubagés montés axialement dans le turboréacteur. Le disque aubagé amont, connu de l'homme du métier sous la désignation de soufflante, a pour fonction, d'une part, d'accélérer un flux d'air d'amont en aval dans le turboréacteur et, d'autre part, de fournir la poussée de l'aéronef.

Au cours du vol de l'aéronef, le turboréacteur peut ingérer des corps étrangers (oiseaux, poussière, etc.) qui endommagent et déforment les aubes de la soufflante. Les performances et la durée de vie des aubes de la soufflante sont alors diminuées ce qui présente un inconvénient. De manière connue, pour reformer une aube de soufflante, on place cette dernière dans une matrice ayant une empreinte dont la forme correspond à celle d'une aube de forme optimale. Une fois dans la matrice, l'aube endommagée/déformée est compressée à une température de l'ordre de 700°C de manière à ce que cette dernière épouse la forme de l'empreinte de la matrice et reprenne ainsi une forme optimale.

De manière classique, la soufflante comporte des aubes radiales de grandes dimensions afin d'augmenter le taux de dilution du turboréacteur. Afin de limiter la masse de la soufflante et d'améliorer son comportement dynamique, la soufflante d'un turboréacteur est généralement formée d'une seule pièce monobloc connue sous l'abréviation de DAM pour Disque Aubagé Monobloc. Lorsque les aubes d'un DAM sont endommagées, celles-ci ne peuvent pas être réparées par un procédé classique par compression dans une matrice étant donné que les aubes ne peuvent pas être séparées de manière individuelle du DAM.

Pour éliminer cet inconvénient, on connaît par les demandes de brevet français FR 2 882 533 A1 et FR 2 902 360 A1 de la société SNECMA un procédé de réparation d'un DAM par apport de matière dans lequel une éprouvette de matière est soudée au DAM au moyen d'un faisceau d'électrons. Un tel procédé est adapté lorsqu'une partie de l'aube a été arrachée ou endommagée mais est difficile à mettre en oeuvre lorsque les aubes du DAM sont déformées. Ainsi, un DAM dont les aubes sont déformées n'est en pratique jamais réparé.

Afin d'éliminer au moins certains de ces inconvénients, l'invention concerne un procédé de reformage d'une aube de turbomachine selon la revendication 1.

Bien que l'invention tire son origine d'un problème relatif à la réparation d'aubes d'un disque aubagé monobloc (DAM) d'un turboréacteur, l'invention s'applique plus généralement à la réparation de toute aube de turbomachine.

Un procédé de grenaillage est déjà connu de l'art antérieur, par exemple par les demandes de brevet FR 2 815 280 A1, FR 2 815 281 A1 et FR 2 873 609 A1, pour améliorer la résistance de pièces mécaniques, en particulier, des aubes de turbomachine. Un procédé de grenaillage consiste à projeter des billes de petites dimensions ou microbilles sur la surface à traiter pour produire localement une accumulation de contraintes de compression.

Le brevet EP 1 555 329, sur leque est basé le préambule de la revendication 1, révèle un procédé de reformage d'une aube de turbomachine comportant au moins une zone déformée, le procédé comprenant une étape d'acquisition d'un profil de ladite aube et une étape de grenaillage d'une zone de ladite aube.

Un des inconvénients du grenaillage est qu'il peut provoquer un allongement du métal et une déformation des aubes ce qui dégrade leurs performances. A cet effet, il est connu de maintenir fermement l'aube à traiter lors du grenaillage pour limiter toute déformation.

Pour restaurer la forme d'une aube, la demanderesse a détourné l'utilisation classique d'un dispositif de grenaillage de manière à tirer partie des effets considérés traditionnellement comme néfastes. Le grenaillage selon l'invention permet avantageusement de restaurer la forme d'une aube à froid. Contrairement à l'art antérieur, il n'est pas nécessaire d'élever l'aube à des températures élevées ce qui limite le risque d'endommagement thermique et permet d'augmenter la durée de vie de l'aube.

De préférence, le procédé de reformage comporte une étape de grenaillage ultrasonore. De manière avantageuse, un dispositif de grenaillage ultrasonore est aisément positionnable et orientable ce qui permet de reformer de manière rapide une pluralité de zones déformées adjacentes d'une aube. Cela est particulièrement avantageux pour reformer un disque aubagé monobloc (DAM), le dispositif de grenaillage ultrasonore pouvant se placer entre deux aubes consécutives du DAM.

Ainsi, la forme des aubes d'un DAM peut être restaurée de manière rapide en modifiant la position et l'orientation du dispositif de grenaillage ultrasonore.

De manière préférée, l'aube comportant une première face et une deuxième face opposée à la première face, la zone déformée étant située sur la première face, la deuxième face est libre de se déformer au cours du grenaillage de la première face. Comme la deuxième face n'est pas maintenue lors du grenaillage de la zone déformée, le flambage de la zone déformée est favorisé lors du grenaillage ce qui permet une restauration rapide de la forme de la zone déformée.

De préférence, l'aube comportant une première face et une deuxième face opposée à la première face, la zone déformée étant située sur la première face, la deuxième face n'est pas grenaillée au cours du grenaillage de la première face. Ainsi, des contraintes ne sont appliquées que du côté de la première face ce qui favorise le flambage de la zone déformée.

De préférence encore, la zone déformée est grenaillée dans une direction sensiblement normale à la zone déformée de manière à restaurer la zone de manière rapide et reproductible.

Selon une autre caractéristique, le procédé de reformage comporte un enregistrement dans une base de données de déformations d'une association de la zone déformée avec le paramétrage du dispositif de grenaillage.

De manière avantageuse, on forme une base de connaissance de manière empirique suite à un grenaillage en associant une zone déformée donnée à un paramétrage du dispositif de grenaillage. De préférence, on enregistre au moins la position de la zone déformée. De préférence encore, la base de déformations comporte au moins un degré de déformation de la zone déformée. De préférence toujours, on enregistre au moins la durée de grenaillage comme paramétrage du dispositif de grenaillage.

Ainsi, on reforme une aube de manière reproductible et optimale en utilisant un même paramétrage du dispositif de grenaillage lorsqu'une zone déformée, dont les caractéristiques sont connues, est de nouveau détectée.

De préférence, si aucun paramétrage n'est associé à la zone déformée dans la base de données de déformations, on réalise un grenaillage de la zone déformée de l'aube au moyen d'un dispositif de grenaillage pour un paramétrage donné dudit dispositif de manière à restaurer la forme de la zone déformée ; et on enregistre dans la base de données de déformations l'association de la zone déformée avec le paramétrage du dispositif de grenaillage. Ainsi, lorsque c'est la première fois qu'une zone déformée, dont les caractéristiques ne sont pas répertoriées dans la base de connaissances, est détectée, on grenaille la zone déformée de manière manuelle pour restaurer la forme de la zone déformée. Ensuite, on enrichit la base de connaissance en associant la zone déformée avec le paramétrage du dispositif de grenaillage qui a été utilisé pour la reformer.

Selon un aspect préféré de l'invention, l'aube de turbomachine est une aube d'un disque aubagé monobloc. Un procédé de reformage selon l'invention permet une restauration de la forme du DAM même si l'espace entre deux aubes consécutives est très limité.

L'invention sera mieux comprise à la lecture de la description qui va suivre, donnée uniquement à titre d'exemple, et se référant aux dessins annexés sur lesquels :
- la figure 1 est une représentation en perspective d'une aube de turbomachine comportant une pluralité de zones déformées ;
- la figure 2 est une représentation schématique vue en coupe d'une aube avec une zone déformée avant son grenaillage ;
- la figure 3 est une représentation schématique vue en coupe rapprochée de la zone déformée de l'aube ;
- la figure 4 est une représentation perspective du grenaillage d'une zone déformée de l'aube ;
- la figure 5 est une représentation schématique vue en coupe rapprochée de la zone déformée de l'aube lors de son grenaillage ; et
- la figure 6 est un diagramme schématique représentant les étapes d'un procédé de reformage selon l'invention.

Il faut noter que les figures exposent l'invention de manière détaillée pour mettre en oeuvre l'invention, lesdites figures pouvant bien entendu servir à mieux définir l'invention le cas échéant.

L'invention va être présentée pour le reformage d'une aube de turbomachine appartenant à un disque aubagé monobloc (DAM) d'un turboréacteur mais il va de soi que la description suivante s'applique à toute aube de turbomachine.

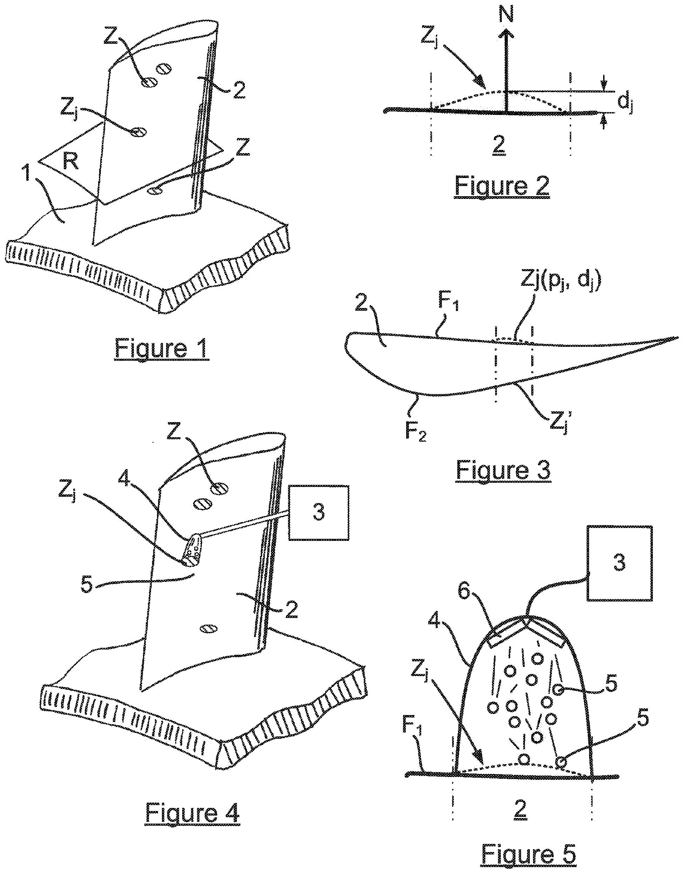

La figure 1 représente partiellement un DAM d'un turboréacteur axial comportant une jante annulaire 1 s'étendant axialement et une aube 2 s'étendant radialement. Par souci de clarté, seule une aube 2 du DAM est représentée sur la figure 1. Au cours du fonctionnement de l'aéronef, les aubes 2 du DAM se déforment ce qui affecte leurs performances aérodynamiques. Pour détecter les déformations d'une aube à reformer 2, plusieurs méthodes manuelles ou automatisées peuvent être mises en oeuvre.

Comme représenté sur la figure 1, l'aube à reformer 2 comporte une pluralité de zones déformées Z qui nuisent aux performances aérodynamiques de l'aube 2. La restauration de la forme de la zone déformée référencée Zj sur la figure 1 et située dans le plan transversal R va être dorénavant présentée.

### Zones déformées Z

De manière préférée, chaque zone déformée Z de l'aube à reformer 2 possède une surface sensiblement égale. Ainsi, une grande surface déformée de l'aube 2 peut être divisée en une pluralité de surfaces élémentaires correspondant chacune à une zone déformée Z selon l'invention. A titre d'exemple, la surface d'une zone déformée Z est de l'ordre de 3 000 mm². Chaque zone déformée Z est ici définie par plusieurs paramètres : sa position p sur l'aube 2 et son degré de déformation d. Ainsi, à titre d'exemple, en référence à la figure 3, la zone déformée référencée Zj sur la figure 1 est définie par des coordonnées tridimensionnelles pⱼ indiquant sa position par rapport à un point de référence du DAM ou de l'aube à reformer 2. Le degré de déformation dⱼ de la zone déformée Zj correspond, par exemple, à la différence entre le profil de l'aube à reformer et le profil de l'aube de référence en la position pⱼ de la zone déformée Zj. En référence à la figure 3, la zone déformée Zj est formée, dans cet exemple, sur la face intrados F1 de l'aube 2. De manière préférentielle, en référence à la figure 2, le degré de déformation dⱼ est défini par rapport à la direction normale N de la zone déformée Zj. A titre d'exemple, le degré de déformation d est de l'ordre de 0,05 mm à 0,25 mm.

### Grenaillage des zones déformées

Selon l'invention, les zones déformées Z de l'aube à reformer 2 sont grenaillées de manière à restaurer la forme de l'aube 2 par flambage localisé des zones déformées Z.

Les demandes de brevet FR 2 815 280 A1 et FR 2 815 281 A1 présentent un dispositif de grenaillage apte à mettre en oeuvre l'invention pour restaurer la forme d'une aube 2.

Un dispositif de grenaillage 3, représenté schématiquement aux figures 4 et 5, comporte une cloche 4 comportant une ouverture apte à venir en appui sur une face de l'aube à reformer 2 de manière à ce que la surface de l'aube 2 ferme l'ouverture de la cloche 4 et forme ainsi une enceinte fermée comme représenté sur la figure 5. Le dispositif de grenaillage 3 comporte des surfaces vibrantes 6 disposées à l'intérieur de la cloche 4 qui sont aptes à transmettre de l'énergie cinétique à des projectiles 5 placés dans la cloche 4 de manière à ce que ces derniers soient projetés contre la surface de l'aube 2 fermant la cloche 4 comme représenté à la figure 5.

Dans cet exemple, les projectiles 5 sont des billes ou microbilles qui sont projetées par des sonotrodes 6 de manière à réaliser un grenaillage ultrasonore. Il va de soi que les sonotrodes peuvent être remplacées par d'autres éléments capables de produire des vibrations permettant de projeter de manière comparable des projectiles tels que des billes ou microbilles sur une pièce à traiter.

Un dispositif de grenaillage ultrasonore 3 possède une cloche 4 dont les dimensions sont réduites ce qui permet une manipulation aisée. La cloche 4 peut ainsi être simplement déplacée d'une zone de l'aube déformée Z à une autre zone déformée Z de manière rapide et précise. En outre, une telle cloche 4 peut simplement être déplacée entre deux aubes consécutives d'un DAM ce qui est avantageux.

Bien que l'invention soit présentée pour un grenaillage ultrasonore, il va de soi que l'invention s'applique à tout type de grenaillage.

Selon l'invention, la cloche 4 possède une ouverture dont la surface est sensiblement égale à la surface d'une zone déformée Z. Ainsi, lorsque l'on positionne la cloche 4 selon la direction normale N à la zone déformée Z, la surface de la zone déformée Z peut être entièrement grenaillée de manière à permettre un flambage localisé de l'aube 2 au niveau de la zone déformée Z.

Le dispositif de grenaillage 3 est avantageusement paramétrable de manière à ce que la déformation résultant du grenaillage soit calibrée en fonction du paramétrage choisi. On entend par paramétrage principalement la durée du grenaillage mais il va de soi que d'autres paramètres du dispositif de grenaillage 3 peuvent être pris en compte tels que la quantité d'énergie cinétique transmise aux projectiles, les dimensions des projectiles, les dimensions de la cloche, etc.

Pour restaurer la forme de l'aube 2, en référence à la figure 5, la cloche 4 du dispositif de grenaillage 3 est mise en contact sur la face intrados F1 de l'aube 2 de manière à ce que la zone déformée Zj soit entourée par le bord d'ouverture de la cloche 4. Les projectiles 5 du dispositif de grenaillage 3 logés dans la cloche 4 sont accélérés par les sonotrodes 6 montés dans la cloche 4 pour venir impacter la zone Zj qui se déforme en fonction du paramétrage du dispositif de grenaillage 3.

Dans cet exemple, en référence à la figure 3, pour favoriser le phénomène de flambage localisé, la zone Zj' située sur la face F2 de l'aube 2 opposée à la zone déformée Zj, c'est-à-dire la face extrados F2, n'est pas maintenue lors du grenaillage de manière à faciliter la déformation de la zone déformée Zj. Cela va à l'encontre de l'enseignement des procédés de grenaillage selon l'art antérieur qui préconisent de contraindre la zone opposée Zj' pour faciliter le traitement surfacique de la zone grenaillée et éviter toute déformation. La zone opposée Zj' peut être grenaillée au cours du procédé de reformage si elle présente une déformation. De préférence, une zone déformée Zj et sa zone opposée Zj' ne sont pas grenaillées simultanément de manière à favoriser le flambage de l'aube à reformer 2.

Lorsque les projectiles 5 entrent en contact avec la zone déformée Z, l'aube se déforme localement par flambage. Toute déformation en saillie par rapport au profil de l'aube de référence est alors lissée de manière à retrouver un profil optimal. Après grenaillage, la forme de la zone déformée Z est restaurée ce qui améliore les performances aérodynamiques de l'aube 2.

### Procédé de reformaae

Afin de permettre un reformage des aubes 2 précis, rapide et reproductible, le procédé est de préférence mis en oeuvre au moyen d'un automate robotisé (non représenté) sur lequel est monté tout ou partie du dispositif de grenaillage 3. Par la suite, l'invention va être présentée pour un automate comportant au moins la cloche 4 du dispositif de grenaillage 3 montée à une extrémité d'un bras robotisé de l'automate. De préférence, le bras de l'automate qui est apte à se déplacer dans toutes les positions et selon toutes les orientations.

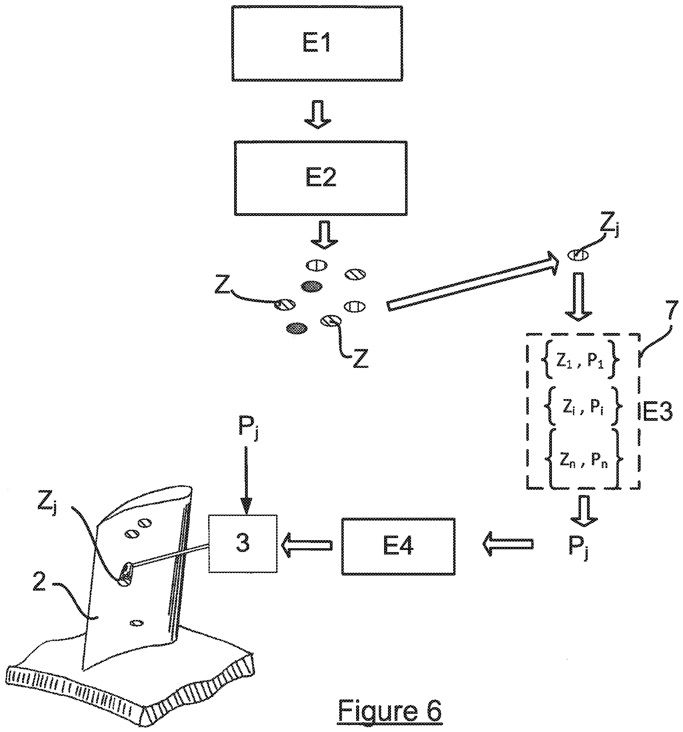

De manière préférée, en référence à la figure 6, le procédé de reformage selon l'invention comporte une étape d'acquisition E1 du profil de l'aube à reformer 2. Cette acquisition E1 est réalisée de préférence au moyen d'un dispositif d'acquisition sans contact, connu de l'homme du métier, qui permet d'obtenir les coordonnées tridimensionnelles d'une pluralité de points à la surface de l'aube à reformer 2 pour former un nuage de points définissant le profil de l'aube à reformer 2. De manière préférée, l'acquisition est réalisée par photogrammétrie ce qui présente l'avantage de disposer de manière rapide d'un fichier précis composé de nuages de points correspondant au profil de l'aube.

Ensuite, l'étape d'acquisition E1 est suivie d'une étape de comparaison E2 au cours de laquelle le profil acquis est comparé à un profil de référence de l'aube 2. Ce profil de référence se présente classiquement sous la forme d'un modèle mathématique défini en 3D, de préférence, sous la forme d'un maillage. Lors de la comparaison E2, les écarts de forme sont mis en évidence et localisés dans l'espace. De préférence, les écarts de forme sont divisés en zones élémentaires, dont la surface est déterminée, et qui correspondent aux zones de déformations Z telles que présentées précédem ment.

De préférence encore, chaque zone de déformation Zj est caractérisée par sa position dans l'espace pj ainsi que son degré de déformation dj tel que présenté précédemment.

Ensuite, chaque zone de déformation Zj est recherchée dans une base de données de déformations 7 comportant une pluralité de zones déformées Zi associées respectivement à une pluralité de paramétrages Pi du dispositif de grenaillage ultrasonore 3. Comme cela sera détaillé par la suite, la base de données 7 est formée de manière empirique suite au grenaillage manuel d'une pluralité de zones de déformation Z, dont les positions spatiales et les degrés de déformation sont différents, ayant permis de restaurer la forme desdites zones déformées Z. En effet, pour restaurer la forme de l'aube 2 de manière optimale, chaque zone déformée Zj est grenaillée par le dispositif de grenaillage 3 dont le paramétrage Pj est défini « sur mesure » en fonction des caractéristiques propres de la zone déformée Zj.

Au cours de l'étape E3 de recherche dans la base de données de déformations 7, chaque zone déformée Zj de l'aube à reformer 2 est associée à un paramétrage Pj du dispositif de grenaillage 3.

Ensuite, au cours d'une étape de grenaillage E4, on place la cloche 4 du dispositif de grenaillage 3 sur la zone déformée Zj et on paramètre le dispositif de grenaillage 3 avec le paramétrage Pj associé à la zone déformée donnée Zj pour restaurer de manière optimale l'aube 2. De manière avantageuse, lorsque le dispositif de grenaillage 3 est monté sur un automate robotisé, le déplacement et le paramétrage du dispositif de grenaillage 3 peut être accéléré de manière significative ce qui permet de restaurer entièrement la forme d'une aube 2 dans un temps réduit. Cela est particulièrement avantageux pour reformer un DAM comprenant une pluralité d'aubes 2 comportant chacune une pluralité de zones déformées Z.

Pour créer la base de données de déformations 7, on sélectionne une zone déformée donnée Zj avec un degré de déformation donné dj puis on grenaille la dite zone donnée Zj de manière à la déformer tout en mesurant la durée de grenaillage. Lorsque la forme de la zone Zj est restaurée, on stoppe le grenaillage et on en déduit la durée du grenaillage ayant permis de restaurer la zone déformée Zj.

Ensuite, on associe dans la base de données de déformations 7 la zone déformée Zj (de position donnée pj et de degré de déformation donné dj) avec le paramétrage Pj du dispositif de grenaillage 3, dans cet exemple, la durée de grenaillage mesurée tj. Ainsi, si une même zone déformée Zj est détectée par la suite (même position pj et même degré de déformation dj), on connaît la durée optimale de grenaillage tj pour reformer ladite zone Zj.

Il a été précédemment présenté une détermination de la durée optimale de grenaillage mais il va de soi que l'on peut mesurer d'autres valeurs pour déterminer le paramétrage optimal du dispositif de grenaillage 3 pour une zone déformée donnée, par exemple, la dimension des projectiles, la vitesse des projectiles, la fréquence d'impacts, le nombre de billes, etc.

De manière préférée, au cours de la recherche du paramétrage adéquat du dispositif de grenaillage 3 dans la base de données 7 pour une zone déformée donnée Zj, le paramétrage peut être déduit par interpolation de paramétrages présents dans la base de données 7. Cela permet de restaurer l'aube 2 de manière rapide lorsque la taille de la base de données 7 est peu importante.

De manière préférée, après grenaillage, on traite thermiquement la zone Zj de l'aube 2 de manière à supprimer toutes les contraintes de compression ajoutées lors de la restauration de la forme de l'aube par grenaillage ultrasonore. De telles contraintes de compression ne sont pas désirées lors du fonctionnement du moteur.

## Revendications

1. Procédé de reformage d'une aube de turbomachine (2) comportant au moins une zone déformée (Z), procédé comprenant :
a. une acquisition d'un profil de ladite aube (2),
lequel procédé est **caractérisé par** les étapes suivantes :
b. une comparaison dudit profil à un profil de référence de manière à en déduire au moins une zone déformée (Zⱼ) de l'aube (2) ;
c. une comparaison de la zone déformée (Zⱼ) à une base de données de déformations (7) comportant une pluralité de zones déformées (Zᵢ) associées respectivement à une pluralité de paramétrages (Pᵢ) d'un dispositif de grenaillage (3) ;
d. une détermination du paramétrage (Pⱼ) associé à ladite zone déformée (Zⱼ) ; et
e. un grenaillage de la zone déformée (Zⱼ) de l'aube (2) au moyen du dispositif de grenaillage (3) en fonction dudit paramétrage déterminé (Pⱼ) de manière à restaurer la forme de ladite zone (Z).

2. Procédé selon la revendication précédente, dans lequel le grenaillage est un grenaillage ultrasonore.

3. Procédé selon l'une des revendications 1 à 2, dans lequel, l'aube (2) comportant une première face (F1) et une deuxième face (F2) opposée à la première face (F1), la zone déformée (Z) étant située sur la première face (F1), la deuxième face (F2) est libre de se déformer au cours du grenaillage de la première face (F1)

4. Procédé selon l'une des revendications 1 à 3, dans lequel l'aube (2) comportant une première face (F1) et une deuxième face (F2) opposée à la première face (F1), la zone déformée (Z) étant située sur la première face (F1), la deuxième face (F2) n'est pas grenaillée au cours du grenaillage de la première face (F1).

5. Procédé selon l'une des revendications 1 à 4, dans lequel, la zone déformée (Z) est grenaillée dans une direction sensiblement normale (N) à la zone déformée (Z).

6. Procédé selon l'une des revendications 1 à 5 comprenant en outre un enregistrement dans une base de données de déformations (Z) d'une association de la zone déformée (Zⱼ) avec le paramétrage (Pⱼ) du dispositif de grenaillage (3).

7. Procédé selon la revendication 6, dans lequel la base de déformations (7) comporte au moins un degré de déformation (dⱼ) de la zone déformée (Zⱼ).

8. Procédé selon la revendication 1, dans lequel, si aucun paramétrage (Pⱼ) n'est associé à la zone déformée (Zⱼ) dans la base de données de déformations (7), on réalise un grenaillage de la zone déformée (Zⱼ) de l'aube au moyen d'un dispositif de grenaillage pour un paramétrage donné dudit dispositif de manière à restaurer la forme de la zone déformée (Zⱼ) ; et on enregistre dans la base de données de déformations l'association de la zone déformée (Zⱼ) avec le paramétrage du dispositif de grenaillage (3).

9. Procédé selon l'une des revendications 1 à 8, dans lequel l'aube de turbomachine (2) est une aube d'un disque aubagé monobloc.

## Patentansprüche

1. Verfahren zum Umformen einer Turbinenmotorschaufel (2), aufweisend mindestens eine verformte Zone (Z), wobei das Verfahren umfasst:
a. eine Akquisition eines Profils der Schaufel (2), wobei das
Verfahren durch die folgenden Schritte gekennzeichnet ist:
b. einen Vergleich des Profils mit einem Referenzprofil, um daraus mindestens eine verformte Zone (Zⱼ) der Schaufel (2) abzuleiten;
c. einen Vergleich der verformten Zone (Zⱼ) mit einer Verformungen-Datenbank (7), die eine Vielzahl von verformten Zonen (Zᵢ) aufweist, die jeweils einer Vielzahl von Parametrisierungen (Pᵢ) einer Kugelstrahlvorrichtung (3) zugeordnet sind;
d. eine Bestimmung der Parametrisierung (Pⱼ), die der verformten Zone (Zⱼ) zugeordnet ist; und
e. ein Kugelstrahlen der verformten Zone (Zⱼ) der Schaufel (2) mithilfe der Kugelstrahlvorrichtung (3) in Abhängigkeit von der bestimmten Parametrisierung (Pⱼ), um die Form der Zone (Z) wiederherzustellen.

2. Verfahren nach dem vorstehenden Anspruch, wobei das Kugelstrahlen ein Ultraschall-Kugelstrahlen ist.

3. Verfahren nach einem der Ansprüche 1 bis 2, wobei die Schaufel (2) eine erste Seite (F1) und eine zweite Seite (F2), die der ersten Seite (F1) gegenüberliegt, aufweist, die verformte Zone (Z) auf der ersten Seite (F1) liegt, die zweite Seite (F2) sich wahlweise im Verlauf des Kugelstrahlens der ersten Seite (F1) verformen kann.

4. Verfahren nach einem der Ansprüche 1 bis 3, wobei die Schaufel (2) eine erste Seite (F1) und eine zweite Seite (F2), die der ersten Seite (F1) gegenüberliegt, aufweist, die verformte Zone (Z) auf der ersten Seite (F1) liegt, die zweite Seite (F2) im Verlauf des Kugelstrahlens der ersten Seite (F1) nicht kugelstrahlt wird.

5. Verfahren nach einem der Ansprüche 1 bis 4, wobei die verformte Zone (Z) in eine zur verformten Zone (Z) im Wesentlichen senkrechte Richtung (N) kugelstrahlt wird.

6. Verfahren nach einem der Ansprüche 1 bis 5, weiter umfassend eine Speicherung in einer Verformungen-Datenbank (Z) einer Zuordnung der verformten Zone (Zⱼ) zur Parametrisierung (Pⱼ) der Kugelstrahlvorrichtung (3).

7. Verfahren nach Anspruch 6, wobei die Verformungen-Datenbank (7) mindestens einen Verformungsgrad (dⱼ) der verformten Zone (Zⱼ) aufweist.

8. Verfahren nach Anspruch 1, wobei, wenn der verformten Zone (Zj) in der Verformungen-Datenbank (7) keine Parametrisierung (Pⱼ) zugeordnet ist, ein Kugelstrahlen der verformten Zone (Zⱼ) der Schaufel mithilfe einer Kugelstrahlvorrichtung für eine durch die Vorrichtung gegebene Parametrisierung durchgeführt wird, um die Form der verformten Zone (Zⱼ) wiederherzustellen; und in der Verformungen-Datenbank die Zuordnung der verformten Zone (Zⱼ) zur Parametrisierung der Kugelstrahlvorrichtung (3) eingespeichert wird.

9. Verfahren nach einem der Ansprüche 1 bis 8, wobei die Turbinenmotorschaufel (2) eine Schaufel einer beschaufelten Monoblockscheibe ist.

## Claims

1. Method for reshaping a turbine engine blade (2) comprising at least one deformed zone (Z), said method comprising:
a. acquisition of a profile of said blade (2);
which method being **characterized by** the following step:
b. comparison of said profile with a reference profile in such a way as to deduce therefrom at least one deformed zone (Zⱼ) of the blade (2);
c. comparison of the deformed zone (Zⱼ) with a deformation database (7) including a plurality of deformed zones (Zᵢ) associated respectively with a plurality of parameterisations (Pᵢ) of a peening device (3);
d. determination of the parameterisation (Pⱼ) associated with said deformed zone (Zⱼ); and
e. peening of the deformed zone (Zⱼ) of the blade (2) by means of the peening device (3) as a function of said determined parameterisation (Pⱼ) in such a way as to restore the shape of said zone (Z).

2. Method according to the preceding claim, wherein the peening is an ultrasonic peening.

3. Method according to either Claim 1 or 2, wherein as the blade comprises a first face (F1) and a second face (F2) opposite the first face (F1), and as the deformed zone (Z) being situated on the first face (F1), the second face (F2) is free to deform during peening of the first face (F1).

4. Method according to any of Claims 1 to 3, wherein as the blade comprises a first face (F1) and a second face (F2) opposite the first face (F1), and as the deformed zone (Z) being situated on the first face (F1), the second face (F2) is not peened during peening of the first face (F1).

5. Method according to any of Claims 1 to 4, wherein the deformed zone (Z) is peened in a direction substantially normal (N) to the deformed zone (Z).

6. Method according to any of Claims 1 to 5, comprising further a recording in a deformation database (Z) of an association of the deformed zone (Zⱼ) with the parameterisation (Pⱼ) of the peening device (3).

7. Method according to Claim 6, wherein the deformation database (7) includes at least one degree of deformation (dⱼ) of the deformed zone (Zⱼ).

8. Method according to Claim 1, wherein if no parameterisation (Pⱼ) is associated with the deformed zone (Zⱼ) in the deformation database (7), peening of the deformed zone (Zⱼ) of the blade is performed by means of a peening device for a given parameterisation of said device in such a way as to restore the shape of the deformed zone (Zⱼ); and the association of the deformed zone (Zⱼ) with the parameterisation of the peening device (3) is recorded in the deformation database.

9. Method according to any of Claims 1 to 8, wherein the turbine engine blade (2) is a blade of an integrally bladed rotor.
